# EUROPEAN PATENT APPLICATION

(11) **EP 2 039 890 A2**
(43) Date of publication of application: **25.03.2009**
(21) Application number: 08164609.3
(22) Date of filing: 18.09.2008
(51) Int. Cl.: F01D 17/16, F01D 25/02, F02C 6/12

(54) **Turbocharger with variable nozzle mechanism**

(30) Priority: 21.09.2007 JP 2007245628
(71) Applicant: KABUSHIKI KAISHA TOYOTA JIDOSHOKKI, Kariya-shi, Aichi 448-8671 (JP); Toyota Jidosha Kabushiki Kaisha, Toyota-shi, Aichi 471-8571 (JP)
(72) Inventor: Yasui, Tomohiro, Kariya-shi Aichi 448-8671 (JP); Fujita, Shuichi, Kariya-shi Aichi 448-8671 (JP); Kawamoto, Masuo, Toyota-shi Aichi 471-8571 (JP); Isogai, Tomoyuki, Toyota-shi Aichi 471-8571 (JP)
(74) Representative: TBK-Patent

(57) **Abstract**

A turbocharger having a variable nozzle mechanism (38), which is accommodated in an accommodating chamber (27), is disclosed. The variable nozzle mechanism has a nozzle ring (19), a nozzle vane (21), a nozzle vane drive mechanism (37), and a support ring (28). The nozzle ring defines a gas passage through which exhaust gas is guided to a turbine wheel. The nozzle vane is supported by the nozzle ring and varies the flow area of the gas passage. The nozzle vane drive mechanism drives the nozzle vane. The support ring is connected to the nozzle ring. The nozzle vane drive mechanism is accommodated in the accommodating chamber as spaced from the nozzle ring through the support ring. The turbocharger has a drain passage (32) that extends through a lower portion of the support ring and reaches the gas passage. The drain passage is located downward from the nozzle vane drive mechanism.

## Description

The present invention relates to a turbocharger having a turbine housing accommodating a turbine wheel rotated by receiving exhaust gas blown onto the turbine wheel from an internal combustion engine and a variable nozzle mechanism.

Japanese Laid-Open Patent Publication No. 2006-125588 discloses a turbocharger having a variable nozzle mechanism. The variable nozzle mechanism regulates the flow rate of the exhaust gas blown onto a turbine wheel accommodated in a turbine housing through selective opening and closing of a plurality of nozzle vanes arranged in a gas passage. The variable nozzle mechanism includes a nozzle ring and a nozzle vane drive mechanism. The nozzle vane drive mechanism includes a rotatable unison ring and a plurality of arms, which pivot when the unison ring rotates. Specifically, when the arms pivot as the unison ring rotates, the nozzle vanes, which are connected to the arms, pivot. A support ring is provided between the nozzle ring and the unison ring. The support ring is secured to the nozzle ring, and the unison ring is pressed against the support ring by an annular stopper member secured to the support ring.

If the variable nozzle mechanism thermally expands and interferes with the turbine housing after the engine has been started, the variable nozzle mechanism may deform and hamper proper operation of the nozzle vanes. However, the variable nozzle mechanism is supported by the turbine housing through the support ring. This structure prevents the variable nozzle mechanism from interfering with the turbine housing despite thermal expansion of the variable nozzle mechanism, which occurs after starting of the engine.

In the turbocharger of the above publication, exhaust gas enters an accommodating chamber that accommodates the nozzle vane drive mechanism. Thus, immediately after the engine is started, moisture contained in the exhaust gas may condense and the water may be retained on the bottom of the accommodating chamber. Unless the engine is stopped immediately after starting of the engine, the water on the bottom evaporates through heating of the exhaust gas. However, if the engine is stopped under a low temperature immediately after the engine has been started, the water may be frozen. This hinders the nozzle vane drive mechanism from operating. Thus, if the engine is re-started in this state, the nozzle vane drive mechanism may be damaged.

### SUMMARY OF THE INVENTION

Accordingly, it is an objective of the present invention to provide a turbocharger having a variable nozzle mechanism that prevents a nozzle vane drive mechanism from being damaged by frozen water.

To achieve the foregoing objective and in accordance with one aspect of the present invention, a turbocharger including a variable nozzle mechanism accommodated in an accommodating chamber is provided. The turbocharger has a turbine wheel rotated by receiving an exhaust gas blown from an internal combustion engine against the turbine wheel and a turbine housing accommodating the turbine wheel. The variable nozzle mechanism includes a nozzle ring defining a gas passage through which the exhaust gas is guided to the turbine wheel, a nozzle vane supported by the nozzle ring to vary a flow area of the gas passage, a nozzle vane drive mechanism that drives the nozzle vane, and a support ring connected to the nozzle ring. The nozzle vane drive mechanism is accommodated in the accommodating chamber while being spaced from the nozzle ring by the support ring. The turbocharger includes a drain passage extending through a lower portion of the support ring and reaching the gas passage. The drain passage is located downward from the nozzle vane drive mechanism.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional side view showing a turbocharger according to a first embodiment of the present invention;
Fig. 2 is an enlarged cross-sectional side view showing the turbocharger illustrated in Fig. 1;
Fig. 3 is a cross-sectional view taken along line 3-3 of Fig. 1;
Fig. 4 is a cross-sectional view taken along line 4-4 of Fig. 1;
Fig. 5 is a cross-sectional view taken along line 5-5 of Fig. 1; and
Fig. 6 is a cross-sectional side view showing a main portion of a turbocharger according to a second embodiment of the present invention.

### DETAILED DESCRIPTION OF THE PREFERRED EMBODIMENTS

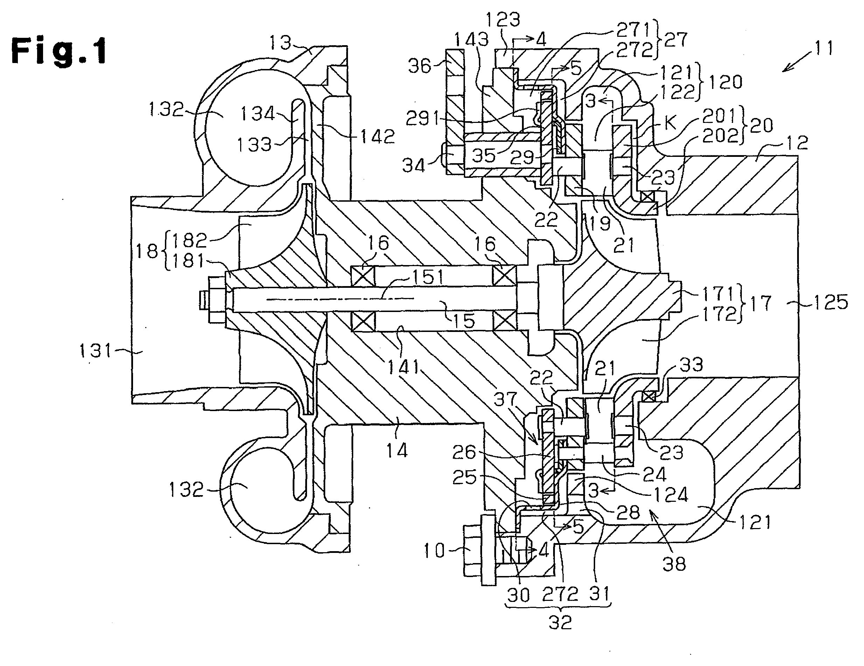

A first embodiment of the present invention will now be described with reference to Figs. 1 to 5.

As shown in Fig. 1, a turbocharger 11 includes a turbine housing 12, a compressor housing 13, and a center housing 14. The turbine housing 12 is arranged in an exhaust passage (not shown) of an internal combustion engine (not shown). The compressor housing 13 is arranged in an intake passage (not shown) of the engine. The center housing 14 connects the turbine housing 12 to the compressor housing 13. A connecting cylindrical portion 123 is formed integrally with the turbine housing 12, and a flange wall 143 is formed integrally with the center housing 14. The flange wall 143 is engaged with the connecting cylindrical portion 123. Specifically, the flange wall 143 is connected to the connecting cylindrical portion 123 through a screw 10 threaded into the connecting cylindrical portion 123 so that the flange wall 143 does not separate from the connecting cylindrical portion 123. This arrangement connects the turbine housing 12 to the center housing 14.

A shaft bore 141 extends through the center housing 14. A rotor shaft 15 is rotatably received in the shaft bore 141 with radial bearings 16.

A turbine wheel 17 is provided in the turbine housing 12 and a compressor wheel 18 is provided in the compressor housing 13. The turbine wheel 17 and the compressor wheel 18 are connected to each other through the rotor shaft 15. The turbine wheel 17, the rotor shaft 15, and the compressor wheel 18 are rotatable integrally with one another about a rotation axis 151 of the rotor shaft 15.

The turbine housing 12 is secured to a first end of the center housing 14 in such a manner that the turbine housing 12 encompasses the outer circumference of the turbine wheel 17. The turbine housing 12 extends in a scroll shape. A scroll passage 121 is defined in the turbine housing 12. The scroll passage 121 communicates with the exhaust passage of the engine and receives the exhaust gas sent from a combustion chamber of the engine into the exhaust passage. An annular passage defining flange 124 is formed integrally with the inner circumferential surface of the connecting cylindrical portion 123. The passage defining flange 124 is a wall that defines the scroll passage 121.

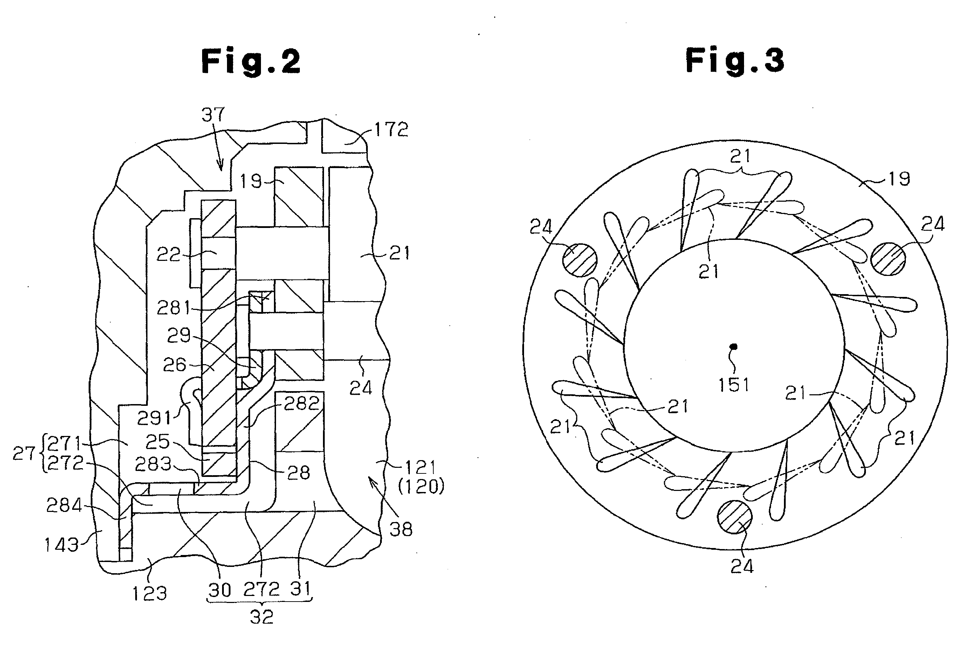

A nozzle ring 19 and an annular shroud 20 are arranged in the turbine housing 12 to face each other. The nozzle ring 19 is arranged at a radially inward position of the passage defining flange 124. The shroud 20 includes a flat plate-like passage defining portion 201 and a cylindrical portion 202. The nozzle ring 19 is connected to the passage defining portion 201 with a plurality of connecting pins 24. An annular swirling passage 122 is defined between the nozzle ring 19 and the passage defining portion 201. As shown in Fig. 3, in the first embodiment, the nozzle ring 19 and the passage defining portion 201 are connected to each other through three connecting pins 24. The exhaust gas is sent from the scroll passage 121 to the swirling passage 122 before being blown onto the turbine wheel 17. In other words, the scroll passage 121 and the swirling passage 122 form a gas passage 120 through which the exhaust gas is guided to the turbine wheel 17. The nozzle ring 19 functions as a wall that defines the gas passage 120.

After having been blown onto the turbine wheel 17, the exhaust gas is discharged to the atmospheric from an outlet line 125 defined in the turbine housing 12 via the non-illustrated exhaust passage.

A seal ring 33 is provided between the outer circumferential surface of the cylindrical portion 202 of the shroud 20 and the inner circumferential surface of the turbine housing 12. The seal ring 33 prevents the exhaust gas from being leaked from the scroll passage 121 into the outlet line 125 through a gap K between the shroud 20 and the turbine housing 12.

A plurality of nozzle vanes 21 are arranged in the swirling passage 122. Each nozzle vane 21 is pivotally supported by the nozzle ring 19 with a support shaft 22. Each nozzle vane 21 is also pivotally supported by the shroud 20 with a support shaft 23 coaxial with the associated support shaft 22. Each nozzle vane 21 is capable of changing the flow area between each adjacent pair of the nozzle vanes 21.

The compressor housing 13 is secured to a second end of the center housing 14 in such a manner as to encompass the outer circumference of the compressor wheel 18. The compressor housing 13 extends in a spiral shape. The compressor housing 13 has an inlet passage 131 having an opening that faces the exterior along the direction of the rotation axis 151 of the rotor shaft 15. A spiral compressor passage 132 and an annular outlet passage 133 are defined in the compressor housing 13. The compressor passage 132 communicates with the combustion chamber of the engine through the intake passage. The outlet passage 133 extends along the compressor passage 132. The outlet passage 133 is provided between a passage defining wall 134, which is a portion of the compressor housing 13, and an end wall 142, which is a portion of the center housing 14.

The turbine wheel 17 has a shaft portion 171 and a plurality of blades 172. The diameter of the shaft portion 171 increases from the side corresponding to the turbine housing 12 toward the side corresponding to the compressor housing 13. The blades 172 are formed integrally with a circumferential surface of the shaft portion 171. The exhaust gas that has been sent from the combustion chamber of the engine to the exhaust passage is blown onto the blades 172 after flowing through the scroll passage 121 and the swirling passage 122. This rotates the turbine wheel 17.

The compressor wheel 18 has a shaft portion 181 and a plurality of blades 182. The diameter of the shaft portion 181 increases from the side corresponding to the compressor housing 13 toward the side corresponding to the turbine housing 12. The blades 182 are formed integrally with a circumferential surface of the shaft portion 181. The compressor wheel 18 rotates integrally with the turbine wheel 17. The blades 182, while rotating, draw air (gas) from the intake passage into the inlet passage 131 and release the air into the outlet passage 133 through centrifugal action. After having reached the outlet passage 133, the air is turbocharged to the combustion chamber via the scroll passage 121.

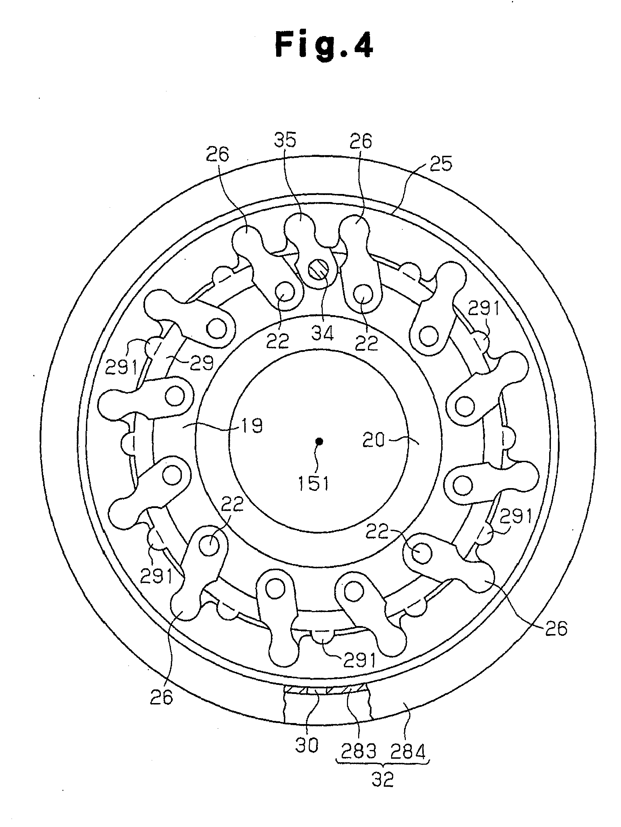

As illustrated in Fig. 4, an end of an arm 26 is secured to each support shaft 22, which pivot relative to the nozzle ring 19. The other end of the arm 26 is engaged with a unison ring 25 in such a manner that the arm 26 is prevented from separating from the unison ring 25. With reference to Fig. 1, the unison ring 25 and the arms 26 are accommodated in an accommodating chamber 27 defined between the flange wall 143 of the center housing 14 and the turbine housing 12. The unison ring 25 is rotatable about the rotation axis 151 of the rotor shaft 15. As the unison ring 25 rotates, the arms 26 pivot about the corresponding support shafts 22 and all of the nozzle vanes 21 pivot about the corresponding support shafts 22, 23 in a common direction.

With reference to Fig. 3, when the nozzle vanes 21 are located at the positions indicated by the solid lines, the nozzle vanes 21 are at maximally open positions, at which the flow area between adjacent nozzle vanes 21 is maximum. When the nozzle vanes 21 are arranged at the positions indicated by the chain lines, the nozzle vanes 21 are at a closed position, at which the flow area becomes zero.

As shown in Fig. 1, in the accommodating chamber 27, a support ring 28, and a stopper ring 29 are stacked on one another and secured to the nozzle ring 19 with the connecting pins 24. With reference to Fig. 2, the support ring 28 has a flat contact portion 281, a flat holding portion 282, a cylindrical portion 283, and a flange portion 284. The contact portion 281 contacts the nozzle ring 19. The holding portion 282 is formed continuously from the contact portion 281 with a stepped portion. The cylindrical portion 283 is formed continuously from the outer edge of the holding portion 282. The flange portion 284 extends continuously from the cylindrical portion 283. The flange portion 284 is supported in a state clamped between the flange wall 143 of the center housing 14 and the connecting cylindrical portion 123 of the turbine housing 12. The cylindrical portion 283 encompasses the unison ring 25 in such a manner as to restrict radial movement of the unison ring 25. The cylindrical portion 283 is spaced from the connecting cylindrical portion 123 of the turbine housing 12. The support ring 28 divides the accommodating chamber 27 into a drive chamber 271 and a drain chamber 272.

As illustrated in Figs. 2 and 4, a plurality of stopper projections 291 are formed integrally with the stopper ring 29 and aligned in a circumferential direction. The stopper projections 291 axially press the unison ring 25 against the holding portion 282 of the support ring 28. This arrangement prevents the unison ring 25 from separating from the support ring 28. The unison ring 25 is rotatable in the cylindrical portion 283 of the support ring 28.

The nozzle ring 19, the shroud 20, the nozzle vanes 21, the support shafts 22, 23, the arms 26, the unison ring 25, and the stopper ring 29, which are shown in Fig. 1, are connected to the support ring 28. Among these components, only the support ring 28 is coupled directly with the turbine housing 12 and the center housing 14. In other words, the nozzle ring 19, the shroud 20, the nozzle vanes 21, the support shafts 22, 23, the arms 26, the unison ring 25, and the stopper ring 29 are connected to the turbine housing 12 and the center housing 14 indirectly through the support ring 28.

The unison ring 25, the stopper ring 29, and the arms 26, which are accommodated in the accommodating chamber 27, configure a nozzle vane drive mechanism 37 also accommodated in the accommodating chamber 27, while held in a state spaced from the nozzle ring 19 through the support ring 28.

As shown in Fig. 1, a support pin 34 is pivotally supported by the flange wall 143 of the center housing 14. A proximal end of a drive arm 35 is secured to a first end of the support pin 34 in the accommodating chamber 27. The distal end of the drive arm 35 is engaged with the unison ring 25. As the drive arm 35 pivots about the support pin 34, the unison ring 25 rotates.

A drive lever 36 is secured to a second end of the support pin 34 at a position outside the center housing 14. The drive lever 36 pivots about the support pin 34 through actuation of a non-illustrated actuator. As the drive lever 36 pivots, the drive arm 35 and the unison ring 25 pivot.

The drive lever 36, the support pin 34, the drive arm 35, the nozzle vane drive mechanism 37, the nozzle ring 19, the shroud 20, the support shafts 22, 23, and the nozzle vanes 21 configure a variable nozzle mechanism 38, which varies the flow area between each adjacent pair of the nozzle vanes 21. The drive lever 36, the support pin 34, the drive arm 35, the nozzle vane drive mechanism 37, and the nozzle ring 19, the support shafts 22, 23 configure a variable transmission mechanism.

With reference to Figs. 1 and 2, a drain hole 30 extends through a lowermost portion of the cylindrical portion 283 of the support ring 28. Another drain hole 31 extends through a lowermost portion of the passage defining flange 124. The drive chamber 271 communicates with the scroll passage 121 (the gas passage 120) through the drain hole 30, the drain chamber 272, and the drain hole 31. The drain hole 30, the drain chamber 272, and the drain hole 31 define a drain passage 32, which extends through a lower portion of the support ring 28 (a lower portion of the cylindrical portion 283) and reaches the gas passage 120. The drain passage 32 is located downward from the nozzle vane drive mechanism 37. This indicates that the drain passage 32 is located in such a manner that the water retained in the drive chamber 271 at a position downward from the nozzle vane drive mechanism 37 flows into the gas passage 120 through the drain passage 32.

The first embodiment has the following advantages. (1) The nozzle ring 19, the shroud 20, the nozzle vanes 21, the support shafts 22, 23, the arms 26, the unison ring 25, and the stopper ring 29 are supported by the support ring 28. This structure prevents these components 19, 20, 21, 22, 23, 26, 25, 29 from interfering with the turbine housing 12 even in a thermally expanded state after starting of the engine. The variable nozzle mechanism 38 is thus prevented from deforming, and inappropriate operation of the nozzle vanes 21, which is caused by deformation of the variable nozzle mechanism 38, is also suppressed. If the engine is stopped immediately after being started, moisture in the exhaust gas in the turbocharger 11 condenses as water. Since the exhaust gas also enters the drive chamber 271, the moisture in the exhaust gas liquefies also in the drive chamber 271. The water then falls onto the bottom of the drive chamber 271. If the water freezes on the bottom of the drive chamber 271, the nozzle vane drive mechanism 37 also freezes and becomes damaged when the engine is re-started.

However, in the first embodiment, the water that has collected on the bottom of the drive chamber 271 flows into the gas passage 120 through the drain passage 32. Thus, even under a low temperature, the water is prevented from freezing on the bottom of the drive chamber 271. This prevents the nozzle vane drive mechanism 37 from becoming damaged by ice. (2) The inlet of the drain passage 32, which is the drain hole 30, extends through the lowermost portion of the support ring 28 and is arranged at the lowermost position of the drive chamber 271. The lowermost portion of the support ring 28, which is located downward from the nozzle vane drive mechanism 37, is preferable as the position at which the inlet of the drain passage 32 is arranged. (3) The seal ring 33 is provided between the outer circumferential surface of the shroud 20 and the inner circumferential surface of the turbine housing 12. This allows thermal expansion and contraction of a body formed by assembling the nozzle ring 19, the shroud 20, the nozzle vanes 21, the support shafts 22, 23, the unison ring 25, the arms 26, the support ring 28, and the stopper ring 29 together in the direction of the rotation axis 151. Thus, even if the components 19, 20, 21, 22, 23, 26, 25, 28, 29 thermally expand after starting of the engine, the components do not interfere with the turbine housing 12.

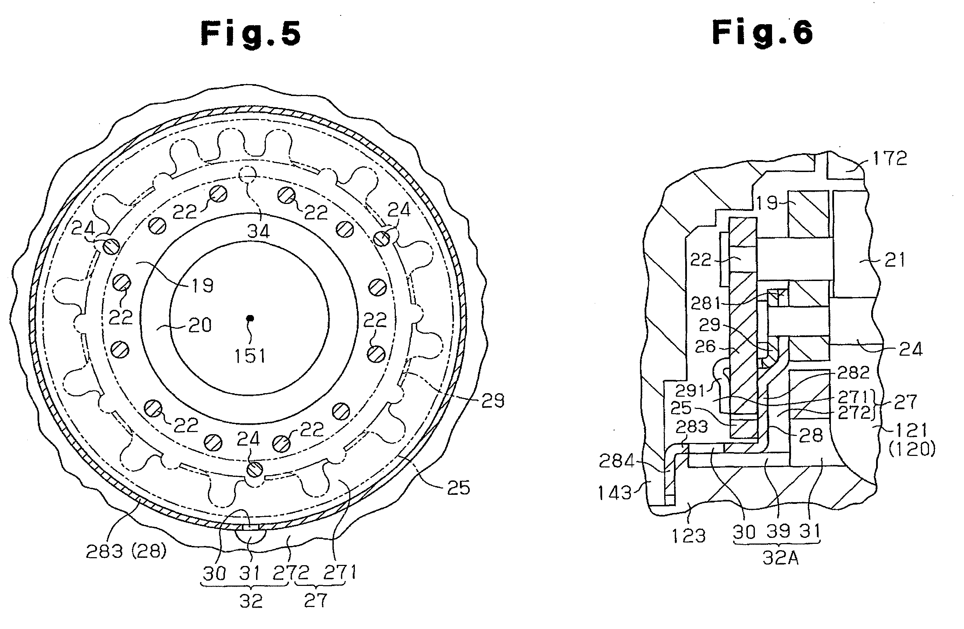

A second embodiment of the present invention will hereafter be explained with reference to Fig. 6. Same or like reference numerals are given to components of the second embodiment that are the same as or like corresponding components of the first embodiment.

In the second embodiment, the outer circumferential surface of the cylindrical portion 283 of the support ring 28 contacts the inner circumferential surface of the connecting cylindrical portion 123 of the turbine housing 12 in a surface-contact manner. A groove 39, or a portion of a drain passage 32A connected to the gas passage 120, extends in the axial direction along the inner circumferential surface of the connecting cylindrical portion 123.

The second embodiment has advantages equivalent to those of the first embodiment.

The present invention may be embodied in the following forms.

In the first embodiment, a plurality of drain holes 30 may be provided.

In the first embodiment, a plurality of drain holes 31 may be arranged.

A turbocharger having a variable nozzle mechanism, which is accommodated in an accommodating chamber, is disclosed. The variable nozzle mechanism has a nozzle ring, a nozzle vane, a nozzle vane drive mechanism, and a support ring. The nozzle ring defines a gas passage through which exhaust gas is guided to a turbine wheel. The nozzle vane is supported by the nozzle ring and varies the flow area of the gas passage. The nozzle vane drive mechanism drives the nozzle vane. The support ring is connected to the nozzle ring. The nozzle vane drive mechanism is accommodated in the accommodating chamber as spaced from the nozzle ring through the support ring. The turbocharger has a drain passage that extends through a lower portion of the support ring and reaches the gas passage. The drain passage is located downward from the nozzle vane drive mechanism.

## Claims

1. A turbocharger comprising a variable nozzle mechanism (38) accommodated in an accommodating chamber (27), the turbocharger (11) having a turbine wheel (17) rotated by receiving an exhaust gas blown from an internal combustion engine against the turbine wheel (17) and a turbine housing (12) accommodating the turbine wheel (17), the turbocharger (11) being **characterized in that** the variable nozzle mechanism (38) includes:
a nozzle ring (19) defining a gas passage (120) through which the exhaust gas is guided to the turbine wheel (17);
a nozzle vane (21) supported by the nozzle ring (19) to vary a flow area of the gas passage (120);
a nozzle vane drive mechanism (37) that drives the nozzle vane (21); and
a support ring (28) connected to the nozzle ring (19),
wherein the nozzle vane drive mechanism (37) is accommodated in the accommodating chamber (27) while being spaced from the nozzle ring (19) by the support ring (28), and
wherein the turbocharger (11) includes a drain passage (32) extending through a lower portion of the support ring (28) and reaching the gas passage (120), the drain passage (32) being located downward from the nozzle vane drive mechanism (37).

2. The turbocharger according to claim 1, **characterized in that** the drain passage (32) extends through a lowermost portion of the support ring (28).

3. The turbocharger according to claim 1 or 2, **characterized in that** the drain passage (32) extends through the turbine housing (12).

4. The turbocharger according to any one of claims 1 to 3, **characterized in that** the support ring (28) divides the accommodating chamber (27) into a drive chamber (271) and a drain chamber (272),
wherein the nozzle vane drive mechanism (37) is accommodated in the drive chamber (271), and
wherein the drain passage (32) includes a drain hole (30) formed in the support ring (28), the drain chamber (272), and another drain hole (31) formed in the turbine housing (12).

5. The turbocharger according to any one of claims 1 to 4, **characterized in that** the support ring (28) divides the accommodating chamber (27) into a drive chamber (271) and a drain chamber (272), wherein the nozzle vane drive mechanism (37) is accommodated in the drive chamber (271), and wherein the drain passage (32) extends through the support ring (28) in such a manner that a lowermost portion of the drive chamber (271) communicates with the drain chamber (272).

6. The turbocharger according to any one of claims 1 to 5, **characterized in that** the variable nozzle mechanism (38) includes:
a shroud (20) connected to the nozzle ring (19);
the nozzle vane (21) supported between the nozzle ring (19) and the shroud (20); and
a variable transmission mechanism including a unison ring (25) that changes the opening degree of the nozzle vane (21),
wherein the support ring (28) is arranged between the unison ring (25) and the nozzle ring (19), and
wherein the shroud (20) includes a passage defining portion (201) and a cylindrical portion (202), a seal ring (33) being provided between an outer circumferential surface of the cylindrical portion (202) and the turbine housing (12).
